# EUROPÄISCHE PATENTSCHRIFT

(11) **EP 1 574 120 B1**
(45) Veröffentlichungstag und Bekanntmachung des Hinweises auf die Patenterteilung: **19.10.2011**
(21) Anmeldenummer: 05004611.9
(22) Anmeldetag: 03.03.2005
(51) Int. Cl.: A01B 33/08

(54) **Kreiselegge**
Rotary harrow
Herse rotative

(30) Priorität: 10.03.2004 DE 102004011649
(43) Veröffentlichungstag der Anmeldung: 14.09.2005
(73) Patentinhaber: Amazonen-Werke H. Dreyer GmbH & Co. KG, 49205 Hasbergen (DE)
(72) Erfinder: Gieseke, Reinhard, 27798 Hude (DE); Tiessen, Reimer Uwe, 26135 Oldenburg (DE)

(56) Entgegenhaltungen:
- EP-A- 1 295 520
- GB-A- 1 413 672
- US-A- 4 111 266

## Beschreibung

Die Erfindung betrifft eine Kreiselegge gemäß des Oberbegriffes des Patentanspruches 1.

Eine derartige Kreiselegge ist beispielsweise in der EP 12 95 520 A2 beschrieben. Bei dieser Kreiselegge ragt das Ritzel des Hauptgetriebes in die Getriebewanne hinein und steht mit einem Stirnrad des die Kreisel antreibenden Stirnradgetriebes in Antriebsverbindung. Die Antriebswelle des Hauptgetriebes, welche das Ritzel trägt, ist in dem Gehäuse des Hauptgetriebes gelagert. Das Hauptgetriebe ist über eine flanschartige Verbindung mit dem oberen Bereich der Getriebewanne bzw. dem Deckel verschraubt. Eine weitere Abstützung des Hauptgetriebes bzw. der Lagerung der Ritzelwelle ist nicht vorgesehen.

Der Erfindung liegt die Aufgabe zugrunde, eine sichere Abstützung der das Ritzel tragenden Antriebswelle des Hauptgetriebes gegenüber der Getriebewanne in einfacher Weise zu gewährleisten.

Diese Aufgabe wird erfindungsgemäß durch das kennzeichnende Merkmal des Patentanspruches 1 gelöst. Infolge dieser Maßnahme wird auch bei der Übertragung großer Antriebsleistungen gewährleistet, dass das Ritzel immer in der richtigen Antriebsverbindung zu dem Stirnrad des Stirnradgetriebes der Kreiselegge angeordnet bleibt.

Um eine weitere Entlastung der Verbindungselemente der Flanschanordnung zu erreichen, ist vorgesehen, dass die Gehäusehülse im benachbarten Bereich zu dem Flansch einen weiteren Abstützbereich aufweist, der mit dem Deckel und/oder dem oberen Bereich der Getriebewanne abstützend zusammenwirkt.

Eine einfache Abstützung des oberen Abstützbereiches der Gehäusehülse in dem Deckel wird dadurch erreicht, dass in dem Deckel und/oder dem oberen der Getriebewanne ein mit dem oberen Abstützbereich der Getriebehülse zusammenwirkende passgenaue Bohrung angebracht ist.

Eine gute Ausrichtung der Gehäusehülse zu der Getriebewanne wird dadurch erreicht, dass in der Getriebewanne auf Höhe des unteren Abstützbereiches der Getriebehülse ein an den unteren Abstützbereich der Getriebehülse angepasste passgenaue Aussparung aufweisendes Abstützelement angeordnet ist.

Eine kompakte Ausgestaltung der Getriebewanne mit einer vorteilhaften Anordnung des Ritzelbereiches der Getriebewanne wird dadurch erreicht, dass in der hinteren Wandung der Getriebewanne ein Einsatzelement zur Schaffung eines vergrößerten Getriebewannenbereiches angeordnet ist.

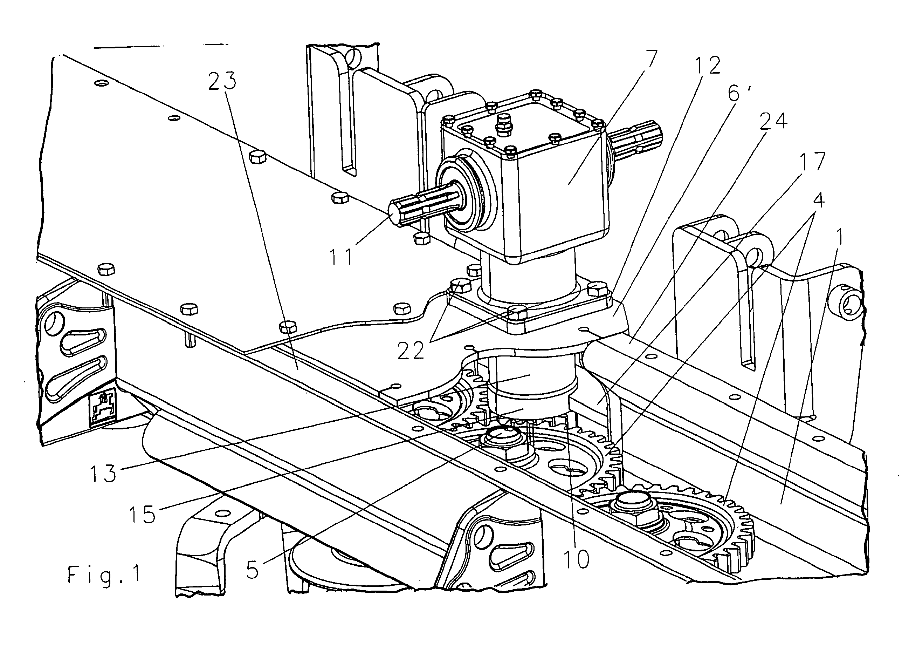

Weitere Einzelheiten der Erfindung sind den übrigen Unteransprüchen, der Beispielsbeschreibung und den Zeichnungen zu entnehmen. Hierbei zeigen
- Fig. 1: die Kreiselegge in perspektivischer Darstellung in Teilansicht und mit auf der rechten Seite abgenommenem Deckel der Getriebewanne,

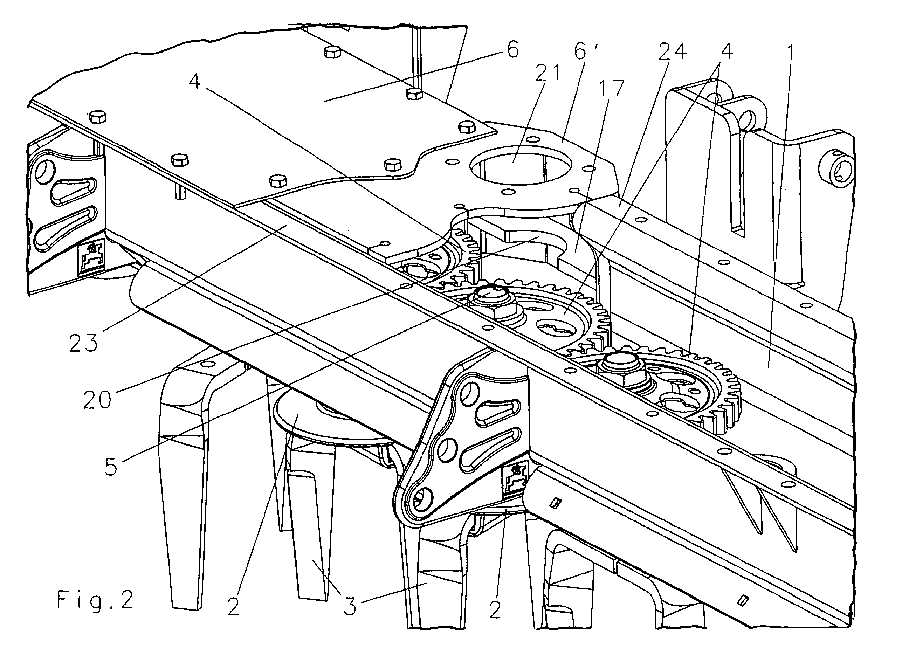

- Fig. 2: die Kreiselegge in perspektivischer Darstellung jedoch mit abgenommenem Hauptgetriebe,

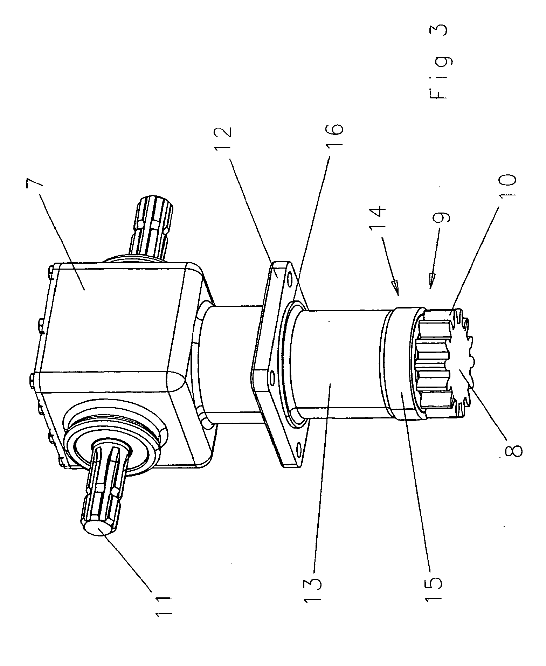

- Fig. 3: das Hauptgetriebe in perspektivischer Darstellung und

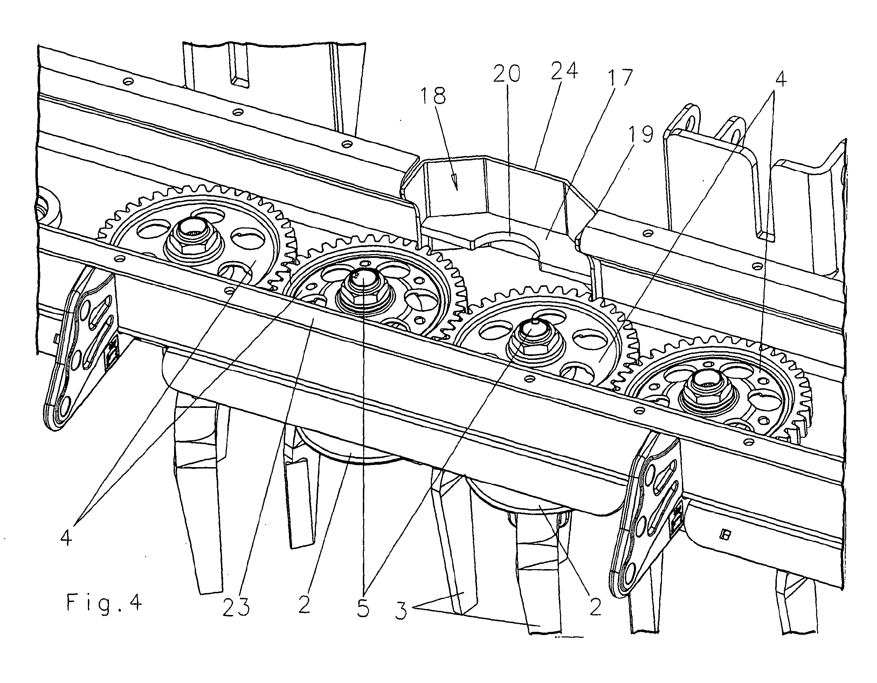

- Fig. 4: die Getriebewanne mit dem Stirnradgetriebe für die Werkzeugkreisel in perspektivischer und ausschnittsweise Darstellung.

Die Kreiselegge weist eine quer zur Fahrtrichtung langgestreckte Getriebewanne 1, in der in bekannter und daher nicht näher dargestellter Weise in Abständen zueinander Werkzeugkreisel 2 gegensinnig rotierend angetrieben gelagert sind, auf. Die Werkzeugkreisel 2 tragen Werkzeuge 3. Die Werkzeugkreisel 2 werden über in der Getriebewanne 1 angeordneten und ineinandergreifenden Stirnräder 4 gegensinnig rotierend angetrieben. Die Rotorwellen 5 der Werkzeugkreisel 2 sind mittels Lager in der Getriebewanne 1 gelagert. Die Getriebewanne 1 wird über Deckelelemente 6, die mit den oberen Bereichen der Getriebewanne 1 verschraubt sind, in bekannter Weise verschlossen. Die Stirnräder 4 des Stirnradtriebes für die Werkzeugkreisel 2 werden über das Hauptgetriebe 7 angetrieben. Hierzu ragt die in dem Gehäuse 8 des Hauptgetriebes 7 gelagert Antriebswelle 8 in die Getriebewanne 1 hinein. Das an dem unteren Ende 9 der Antriebswelle 8 angeordnet Ritzel 10 greift in die Verzahnung eines der Stirnräder 4 des Stirnradgetriebes ein. Hierbei ist zumindest die Verzahnung des Stirnrades 4, die mit dem Ritzel kämmt, gehärtet. Das Hauptgetriebe 7 wird mittels einer auf der Eingangswelle 11 angeordneten Gelenkwelle von der Zapfwelle des die Kreiselegge ziehenden Schleppers angetrieben. Das Hauptgetriebe 7 weist einen Flansch 12 auf, der mit dem oberen Bereich der Getriebewanne 1 bzw. des Deckels 6 verschraubt ist. Des weiteren weist das Hauptgetriebe 7 die in die Getriebewanne 1 hineinragende Getriebehülse 13 auf, in dem die Antriebswelle 8, welche an dem unteren Ende 9 das Antriebsritzel 10 trägt, gelagert ist. Die Getriebehülse 13 ist unterhalb des Flansches 12 angeordnet. Die Getriebehülse 13 weist an ihrem unteren Ende 14 oberhalb des Ritzels 10 einen Abstützbereich 15 sowie einen zweiten Abstützbereich 16 unterhalb des Flansches 12 auf. In der Getriebewanne 1 ist oberhalb der Stirnräder 4 ein Abstützelement 17 angeordnet. In dem Bereich 18, in dem das Ritzel 10 und die Getriebehülse 13 in der Getriebewanne 1 angeordnet sind, ist die hintere Wandung 19 der Getriebewanne 1 nach hinten vergrößert, um einen vergrößerten Getriebewannenbereich 18 für die Anordnung des Ritzels 10 und der Getriebehülse 13 zu schaffen.

In diesem vergrößerten Getriebewannenbereich 18 ist das Abstützelement 17 an der Getriebewanne 1 angeordnet. Der an dem unteren Ende 14 der Getriebehülse 13 oberhalb des Ritzels 10 angeordnete Abstützbereich 15 wirkt mit dem an der Getriebewanne 1 angeordneten Abstützelement 17 abstützend zusammen. Hierzu weist das Abstützelement 17 auf Höhe des unteren Abstützbereiches 15 der Getriebehülse ein an den unteren Abstützbereich 15 der Getriebehülse 13 angepasste passgenaue Aussparung 20 auf. Im Ausführungsbeispiel ist diese Aussparung 20 als Halbkreis ausgebildet. Des weiteren weist die Getriebehülse 13 im benachbarten Bereich zu dem Flansch 12 einen weiteren Abstützbereich 16 auf. Dieser Abstützbereich 16 ist in der montieren Position des Hauptgetriebes 7 in der passgenauen Aussparung 21 in dem Deckel 6' bzw. dem oberen Bereich der Getriebewanne 1 angeordnet. Diese Aussparung 20 ist als passgenaue Bohrung ausgebildet, die an den Abstützbereich 16 der Getriebehülse 13 angepasst ist. Die obere passgenaue Bohrung fluchtet in Draufsicht gesehen mit der unteren passgenauen Aussparung 20.

Aufgrund der aufeinander passgenau abgestimmten im oberen Abstützbereich 16 der Getriebehülse 13 und der oberen passgenauen Bohrung 21 in dem Deckel 6' bzw. dem oberen Bereich der Getriebewanne und dem unteren Abstützbereich 15 der Gehäusehülse 13 in der passgenauen Aussparung 20 des unteren Abstützelementes 17, werden die auf das Ritzel 10 und das Hauptgetriebe 7 einwirkenden Kräfte direkt übertragen, so dass die Schraubverbindungen 22 zwischen dem Flansch 12 des Hauptgetriebes 7 und dem Deckel 6' bzw. dem oberen Bereich der Getriebewanne 1 lediglich zur sicheren Fixierung des Hauptgetriebes 7 gegenüber der Getriebewanne 1 dienen. Die Schraubverbindung 22 ist im Wesentlichen von Übertragungskräften zwischen dem Hauptgetriebe 7 und dem Stirnradgetriebe in der Getriebewanne 1 entlastet. Zur besseren Aussteifung der Getriebewanne 1 ist in der Mitte, im Bereich der Anordnung des Hauptgetriebes 7 zwischen den oberen Enden der vorderen 23 und hinteren 24 Wandung der Getriebewanne 1 bzw. des erweiterten Bereiches 18 der Getriebewanne 1 ein Verbindungsplatte 6' angeordnet, die vorzugsweise eingeschweißt ist.

Insbesondere durch die Abstützung der Getriebehülse 13 direkt oberhalb des Antriebsritzels 10 und des Stirnrades 4 des Stirnradtriebes der Getriebewanne 1 an dem Abstützelement 17, welches an der Getriebewanne 1 angebracht ist, wird der konstruktiv vorgegebene Abstand zwischen Stirnradwelle 5 und Ritzelwelle 8 sicher eingehalten, so dass eine vorschriftsmäßige Kraftübertragung zwischen Ritzel 10 und dem Stirnrad 4 erfolgt.

## Patentansprüche

1. Kreiselegge mit Getriebewanne (1) mit mehreren Stirnrädern (4), die drehfest mit Rotorwellen verbunden sind, die wiederum in der Getriebewanne (1) mittels Lager gelagert sind, wobei die einzelnen Stirnräder (4) nebeneinander angeordnet sind und miteinander im Eingriff stehen, mit einem oberhalb der Getriebewanne (1) angeordneten Hauptgetriebe, welches eine vertikal angeordnete Antriebswelle für den Antrieb der Stirnräder (4) in der Getriebewanne (1) aufweist, wobei die Antriebwelle in die Getriebewanne (1) hineinragt und endseitig ein Ritzel (10) aufweist und im Eingriff mit einem der Stirnräder (4) steht, wobei die Antriebswelle in dem Gehäuse des Hauptgetriebes oberhalb des Ritzels (10) zumindest teilweise in einer in die Getriebewanne (1) hineinragenden Gehäusehülse (13) des Gehäuses gelagert ist, wobei der Flansch des Hauptgetriebes mittels Schraubverbindung mit der Deckel und/oder dem oberen Bereich der Getriebewanne (1) verschraubt ist, **dadurch gekennzeichnet, dass** die Gehäusehülse (13)an ihrem unteren Ende (14) oberhalb des Ritzels (10) einen Abstützbereich (15) aufweist, der mit an der Getriebewanne (1) angeordneten Abstützelement (17) abstützend zusammenwirkt.

2. Kreiselegge nach Anspruch 1, **dadurch gekennzeichnet, dass** die Gehäusehülse (13) im benachbarten Bereich zu dem Flansch (12) einen weiteren Abstützbereich (16) aufweist, der mit dem Deckel (6') und/oder dem oberen Bereich der Getriebewanne (1) abstützend zusammenwirkt.

3. Kreiselegge nach einem oder mehreren der vorstehenden Ansprüche, **dadurch gekennzeichnet, dass** in dem Deckel (6') und/oder dem oberen Bereich ein mit dem oberen Abstützbereich (16) der Getriebehülse (13) zusammenwirkende passgenaue Bohrung (21) angebracht ist.

4. Kreiselegge nach einem oder mehreren der vorstehenden Ansprüche, **dadurch gekennzeichnet, dass** in der Getriebewanne (1) auf Höhe des unteren Abstützbereiches (15) der Getriebehülse (13) ein an den unteren Abstützbereich (15) der Getriebehülse (13) angepasste passgenaue Aussparung (20) aufweisendes Abstützelement (17) angeordnet ist.

5. Kreiselegge nach einem oder mehreren der vorstehenden Ansprüche, **dadurch gekennzeichnet, dass** die obere passgenaue Bohrung (21) mit der unteren passgenauen Aussparung (20) in Draufsicht gesehen fluchtet.

6. Kreiselegge nach einem oder mehreren der vorstehenden Ansprüche, **dadurch gekennzeichnet, dass** in der hinteren Wandung (24) der Getriebewanne (1) ein Einsatzelement zur Schaffung eines vergrößerten Getriebewannenbereiches (18) angeordnet ist.

## Claims

1. Rotary harrow having a gearbox (1) with a plurality of spur gears (4), which spur gears are non-rotatingly connected to rotor shafts, which shafts are mounted in turn in the gearbox (1) by means of bearings, the individual spur gears (4) being arranged adjacent to one another and being in engagement with one another, having a main transmission arranged above the gearbox (1), which transmission exhibits a vertically arranged drive shaft for the purpose of driving the spur gears (4) in the gearbox (1), the drive shaft projecting into the gearbox (1) and exhibiting at one end a pinion (10) and being in engagement with one of the spur gears (4), the drive shaft being mounted in the housing of the main transmission above the pinion (10) at least partially in a housing sleeve (13), projecting into the gearbox (1), of the housing, the flange of the main transmission being screwed by means of a screwed connection to the cover and/or the upper area of the gearbox (1), **characterized in that** the transmission sleeve (13) has, at its lower end (14) above the pinion (10), a supporting area (15) which interacts in a supporting manner with a supporting element (17) arranged on the gearbox (1).

2. Rotary harrow according to Claim 1, **characterized in that** the housing sleeve (13) has, in the area adjacent to the flange (12), a further supporting area (16), which interacts in a supporting manner with the cover (6') and/or the upper area of the gearbox (1).

3. Rotary harrow according to one or more of the preceding claims, **characterized in that** an accurately drilled hole (21) that interacts with the upper supporting area (16) of the transmission sleeve (13) is provided in the cover (6') and/or the upper area.

4. Rotary harrow according to one or more of the preceding claims, **characterized in that** a supporting element (17) having a precisely fitting recess (20) adapted to the lower supporting area (15) of the transmission sleeve (13) is arranged in the gearbox (1) at the level of the lower supporting area (15) of the transmission sleeve (13).

5. Rotary harrow according to one or more of the preceding claims, **characterized in that** the upper accurately drilled hole (21) is aligned with the lower precisely fitting recess (20), as seen in plan view.

6. Rotary harrow according to one or more of the preceding claims, **characterized in that** an insert element for producing an enlarged gearbox area (18) is arranged in the rear wall (24) of the gearbox (1).

## Revendications

1. Herse rotative comportant une cuvette de transmission (1) recevant plusieurs pignons droits (4) reliés solidairement en rotation aux arbres des rotors eux-mêmes montés par des paliers dans la cuvette de transmission (1),
* les différents pignons droits (4) juxtaposés venant en prise les uns avec les autres,
* une transmission principale au-dessus de la cuvette de transmission (1), ayant un arbre d'entraînement vertical pour entraîner les pignons droits (4) de la cuvette de transmission (1),
* l'arbre de transmission venant en saillie dans la cuvette de transmission (1) et portant à son extrémité, un pignon (10) en prise avec l'un des pignons droits (4),
* l'arbre de transmission étant logé dans le boîtier de la transmission principale au-dessus du pignon (10), au moins en partie dans un manchon (13) du boîtier pénétrant dans la cuvette de transmission (1),
* la bride de la transmission principale étant vissée par une liaison vissée au couvercle et/ou à la zone supérieure de la cuvette de transmission (1),
herse rotative **caractérisée en ce que**
l'extrémité inférieure (14) du manchon de boîtier (13) au-dessus du pignon (10), comporte une zone d'appui (15) coopérant dans le sens de l'appui avec un élément d'appui (17) de la cuvette de transmission (1).

2. Herse rotative selon la revendication 1,
**caractérisée en ce que**
dans la zone voisine de la bride (12), le manchon de boîtier (13) comporte une autre zone d'appui (16) coopérant avec le couvercle (6') et/ou avec la zone supérieure de la cuvette de transmission (1), dans le sens de l'appui.

3. Herse rotative selon l'une ou plusieurs des revendications précédentes,
**caractérisée en ce qu'**
le couvercle (6') et/ou la zone supérieure ont un perçage (21) ajusté, coopérant avec la zone d'appui supérieure (16) du manchon de transmission (13).

4. Herse rotative selon l'une ou plusieurs des revendications précédentes,
**caractérisée en ce qu'**
à la hauteur de la zone d'appui inférieure (15) du manchon de transmission (13), la cuvette de transmission (1) comporte un élément d'appui (17) muni d'un dégagement (20) ajusté de manière précise à la zone d'appui inférieure (15) du manchon de transmission (13).

5. Herse rotative selon l'une ou plusieurs des revendications précédentes,
**caractérisée en ce que**
le perçage supérieur (21), ajusté, est aligné en vue de dessus sur le dégagement inférieur ajusté (20).

6. Herse rotative selon l'une ou plusieurs des revendications précédentes,
**caractérisée en ce que**
la paroi arrière (24) de la cuvette de transmission (1) comporte un insert créant une zone agrandie (18) de la cuvette de transmission.
